# EUROPEAN PATENT APPLICATION

(11) **EP 4 835 849 A1**
(43) Date of publication of application: **04.11.2026**
(21) Application number: 26163004.0
(22) Date of filing: 06.03.2026
(51) Int. Cl.: G06V 40/20

(54) **MACHINE LEARNING METHOD, MACHINE LEARNING PROGRAM, AND INFORMATION PROCESSING APPARATUS**

(30) Priority: 07.01.2025 IN 202511001522
(71) Applicant: FUJITSU LIMITED, Kawasaki-shi, Kanagawa 211-8588 (JP)
(72) Inventor: GUJJARI, Venkata Ujwal Sai, 560103 Bangalore (IN); NAGAJE, Suraj, 560103 Bangalore (IN); THAPAR, Daksh, 560103 Bangalore (IN)
(74) Representative: Haseltine Lake Kempner LLP

(57) **Abstract**

A machine learning method carried out by a computer includes for each of a predetermined number of slices divided from point cloud data including a target of gait recognition, determining whether a corresponding slice includes a point out of a distribution that deviates from the distribution of the target, maintaining a point slice determined not to include the point out of the distribution, obtaining a filtered slice by filtering the corresponding slice determined to include the point out of the distribution to remove the point out of the distribution, and merging the point slice determined not to include the point out of the distribution and the filtered slice with each other to reconstitute the point cloud data and generate disentanglement data.

## Description

### FIELD

The embodiment discussed herein is related to a machine learning method, computer-readable recording medium, and an information processing apparatus.

### BACKGROUND

Gait recognition is a technology for executing analysis, identification, etc. on an individual on the basis of his/her walking pattern, so as to be applied to various fields such as security, healthcare, and sports.

Conventionally, there has been known a technology for executing gait recognition by using point cloud data.

Non Patent Literature 1: Chuanfu Shen, Fan Chao, Wei Wu, Rui Wang, George Q. Huang, Shiqi Yu "LidarGait: Benchmarking 3D Gait Recognition with Point Clouds", [online], [searched on November 19, 2024], the Internet <https://ieeexplore.ieee.org/document/10205455>

Non Patent Literature 2: Xiang Li, Yasushi Makihara, Chi Xu, Yasushi Yagi, Mingwu Ren "Gait Recognition via Semi-supervised Disentangled Representation Learning to Identity and Covariate Features", [online], [searched on November 19, 2024], the Internet <https://ieeexplore.ieee.org/document/9156701>

Non Patent Literature 3: Ziyuan Zhang, Luan Tran, Xi Yin, Yousef Atoum, Xiaoming Liu, Jian Wa "Gait Recognition via Disentangled Representation Learning", [online], [searched on November 19, 2024], the Internet <https://ieeexplore.ieee.org/document/8953845>

Non Patent Literature 4: Xinke Li, Junchi Lu, Henghui Ding, Changsheng Sun, Joey Tianyi Zhou, Chee Yeow Meng "Risk-optimized Outlier Removal for Robust 3D Point Cloud Classification", [online], [searched on November 19, 2024], the Internet <https://arxiv.org/abs/2307.10875>

However, in the above-mentioned technologies, even in a case where a walking person is carrying an item (namely, in a case where an external attribute such as a carried item is included), the entire body of the walking person is recognized as a single processing target while including the carried item (namely, the external attribute), and thus performance of a recognition process for gait recognition decreases in some cases.

An object of one aspect of an embodiment is to realize gait recognition having high accuracy.

Accordingly, an object in one aspect of an embodiment of the present invention is to achieve an effect that gait recognition having high accuracy is realized.

### SUMMARY

According to an aspect of an embodiment, a machine learning method carried out by a computer includes for each of a predetermined number of slices divided from point cloud data including a target of gait recognition, determining whether a corresponding slice includes a point out of a distribution that deviates from the distribution of the target, maintaining a point slice determined not to include the point out of the distribution, obtaining a filtered slice by filtering the corresponding slice determined to include the point out of the distribution to remove the point out of the distribution, and merging the point slice determined not to include the point out of the distribution and the filtered slice with each other to reconstitute the point cloud data and generate disentanglement data.

### BRIEF DESCRIPTION OF DRAWINGS

FIG. 1 is a diagram illustrating an information processing apparatus according to a first embodiment.
FIG. 2 is a diagram illustrating a challenge predictor module according to the first embodiment.
FIG. 3 is a diagram illustrating a probability distribution module according to the first embodiment.
FIG. 4 is a diagram illustrating a disentanglement data generating module according to the first embodiment.
FIG. 5 is a functional block diagram illustrating a functional configuration of the information processing apparatus according to the first embodiment.
FIG. 6 is a flowchart illustrating a flow of a training process of the challenge predictor module according to the first embodiment.
FIG. 7 is a flowchart illustrating a flow of a training process of the probability distribution module according to the first embodiment.
FIG. 8 is a flowchart illustrating a flow of an application process according to the first embodiment.
FIG. 9 is a flowchart illustrating a flow of a process for using disentanglement data according to the first embodiment.
FIG. 10 is a diagram illustrating a hardware configuration example.

### DESCRIPTION OF EMBODIMENTS

Hereinafter, preferred embodiments of a machine learning method, a computer-readable recording medium, and an information processing apparatus disclosed in the present application will be specifically explained with reference to accompanying drawings. The present invention is not limited to embodiments described below. Moreover, embodiments may be combined within a consistent range.

### <1. Introduction>

Gait recognition is a technology for executing analysis, identification, etc. on an individual on the basis of his/her walking pattern, and may be applied to various fields such as security, healthcare, and sports.

In a field of security, the gait recognition may be applied as a gait recognition system that is configured to execute analysis, identification, etc. on an individual in public spaces. An abnormal behavior and/or a potential threat can be detected on the basis of a walking pattern.

In a field of healthcare, the gait recognition may be applied to disease diagnosis, monitoring, rehabilitation, etc. Analysis of a walking pattern assists execution of diagnoses of symptoms on patients suffering from Parkinson's disease, stroke, other neurological diseases, and the like. In a case where monitoring and analyzing a walking situation of a patient for a predetermined time period, a rehabilitation program according to the patient can be realized.

In a field of sports, the gait recognition may be applied to overall diagnosis, analysis of performance, and the like. Analysis of walking of an athlete is able to realize improvement in performance, reduction in injury risk, optimization of a training plan, and the like. The gait recognition may be applied to comprehension of motion dynamics and biomechanics.

Point cloud data indicates an individual by using not an image but a point group, and thus has an advantage from a viewpoint of privacy protection. Moreover, point cloud data enables space expression so as to be applied to various real situations. Thus, gait recognition of various situations is possible. Even in a case where a walking person is located in any position, holds any item, and performs any behavior; gait recognition can be executed.

Conventionally, there has been known a technology for executing gait recognition by using point cloud data. However, in the above-mentioned technology, even in a case where a walking person is carrying an item (namely, even in a case where external attribute such as carried item is included), the entire body of the walking person is recognized as a single processing target while including the carried item (namely, external attribute), and thus there presents a case where performance for a recognition process in gait recognition reduces in some cases. Furthermore, in the above-mentioned technology, a special external attribute is missed in some cases by strongly depending on a neural network.

A technology disclosed in Non Patent Literature 4 decides a point of a removal target by using a classification model; however, a point of the above-mentioned removal target is not a point related to an external attribute, but is merely noise that may inhibit performance of a model.

A technology disclosed in Non Patent Literature 1 recognizes the entire body of a walking person as a single processing target while including an external attribute, and thus in a case where the external attribute is included, performance of a recognition process for gait recognition may decrease.

An aspect of the embodiment has been made in consideration of the aforementioned, and an object thereof is to realize gait recognition having high accuracy regardless of presence/absence of an external attribute.

Details will be mentioned later, in the following embodiments, three modules named a challenge predictor module, a probability distribution module, and a disentanglement data generating module are used. The disentanglement data generating module is implemented by using output results of two modules of the challenge predictor module and the probability distribution module.

In the following embodiments, not executing gait recognition while including an external attribute as described above, but removing an external attribute from point cloud data of a processing target to be capable of realizing gait recognition having high accuracy regardless of presence/absence of the external attribute.

In order to enable the above-mentioned, point cloud data of a processing target is divided into slices, and a filtering process is executed on a specific slice alone from among the slices, which includes an external attribute. Thus, the specific slice alone becomes a processing target of filtering, so that it is possible to execute effective processing compared with a case where a processing target of filtering is all of the point cloud data of the processing target.

In a specific slice, a point of an external attribute is removed to be merged with other slices, and data for gait recognition is generated. Data that is not affected by an external attribute is generated as described above, and thus gait recognition having high accuracy (and provision of gait recognition system) can be realized. Thus, even in a case where an external attribute is special, gait recognition having high accuracy becomes possible.

In the following embodiments, a case will be explained as one example, in which a target (namely, gait recognition target) of gait recognition is a walking person (namely, human being); however, not limited thereto, the target may be an animal such as a dog and a cat, a robot, and the like.

### <2. Explanation of Information Processing>

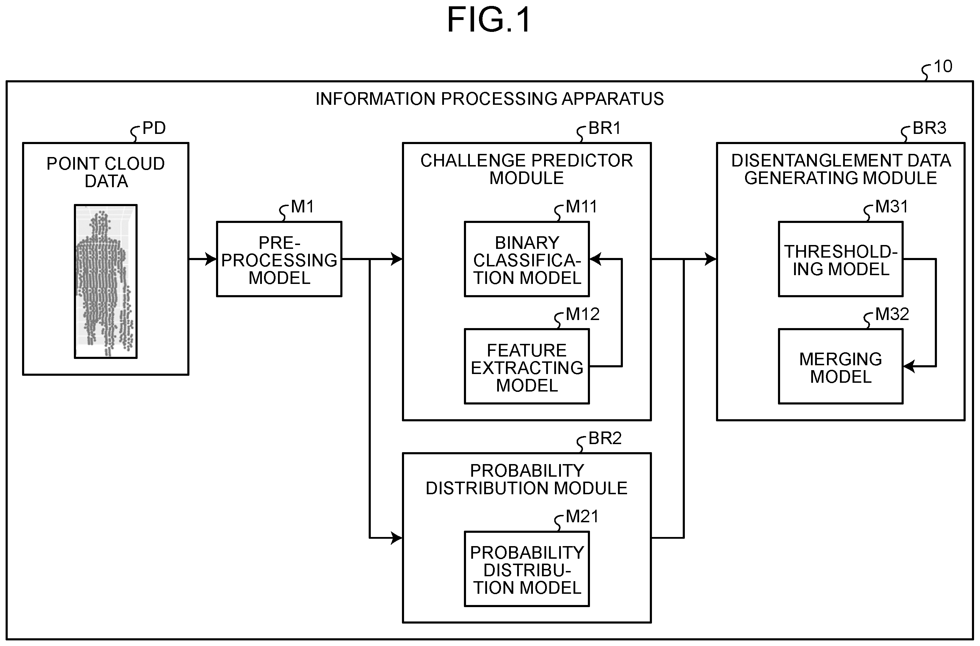

Next, information processing according to the embodiments will be explained. FIG. 1 is a diagram illustrating an information processing apparatus 10 according to a first embodiment. The information processing apparatus 10 illustrated in FIG. 1 is one example of a computer device that is configured to realize gait recognition having high accuracy regardless of presence/absence an external attribute. As illustrated in FIG. 1, the information processing apparatus 10 includes a block BR1, a block BR2, and a block BR3. The block BR1 is a block indicating a challenge predictor module, the block BR2 is a block indicating a probability distribution module, and the block BR3 is a block indicating a disentanglement data generating module.

The information processing apparatus 10 first executes preprocessing (corresponding to preprocessing model M1) while using, as an input, point cloud data (corresponding to point cloud data PD) of walking of a human being (namely, gait recognition target). In the above-mentioned preprocessing, the information processing apparatus 10 divides the input point cloud data (namely, input data) into the preliminarily decided predetermined number of slices. Each of the above-mentioned slices is data obtained by dividing input data, in other words, divided point cloud data.

The information processing apparatus 10 may execute, as a further preprocessing, a process such as Mean Centering (note that further preprocessing may be not limited to mean centering) before execution of the above-mentioned preprocessing. Mean centering is executed, and data is formatted on the same space so as to be normalized. The information processing apparatus 10 may execute a process for dividing data into the predetermined number of slices on the basis of data obtained by executing thereon a process such as mean centering.

Hereinafter, a process will be explained while exemplifying a case where the information processing apparatus 10 divides data into three slices of an upper part, a middle part, and a bottom part along an axis (namely, Z-axis) in a height direction. For convenience of explanation, a process in a case where input data is divided into three slices will be explained as one example; however, the number of slices is not limited to three, and thus may be not limited to the above-mentioned example. Note that it has been experimentally demonstrated that the case of three slices exerts the best performance.

As described above, in a case where slice division is not executed, processing efficiently is not enough, but in a case where slice division is excessively executed, an external attribute is divided and distributed into a plurality of slices in some cases, and processing efficiently may decrease in this case.

The divided upper slice includes a head portion and a chest portion. The divided middle slice includes a torso portion. The divided bottom slice includes a four-limb portion.

Herein, a slice of the upper part, a slice of the middle part, and a slice of the bottom part that are divided as described above are appropriately referred to as "S_{U}", "S_{M}", and "S_{B}", respectively.

The "S_{U}" is point cloud data corresponding to a slice of the upper part of input data. The "S_{M}" is point cloud data corresponding to a slice of the middle part of the input data. The "S_{B}" is point cloud data corresponding to a slice of the bottom part of the input data.

### <Challenge Predictor Module>

The block BR1 indicates a challenge predictor module. The challenge predictor module is a module for specifying a slice including an external attribute. The block BR1 includes a binary classification model M11. The binary classification model M11 is a model that determines presence/absence of an external attribute. In a case where detecting presence of an external attribute, the binary classification model M11 provides a label of a numeric value of "1", and further in a case where not detecting presence of an external attribute, provides a label of a numeric value of "0". In training, a label is provided in a pseudo manner so as to execute training.

The binary classification model M11 differs for each slice. In FIG. 1, the single binary classification model M11 is provided in the block BR1, division is executed to obtain three slices of "S_{U}", "S_{M}", and "S_{B}", and thus the number of the binary classification models M11 is also three. The block BR1 includes the binary classification models M11 whose number is corresponding to the division number of slices.

The information processing apparatus 10 inputs each of the slices (namely, "S_{U}", "S_{M}", and "S_{B}") to the binary classification model M11 corresponding to a category of the corresponding slice. The information processing apparatus 10 inputs "S_{U}" to the binary classification model M11 corresponding to a category of "S_{U}", inputs "S_{M}" to the binary classification model M11 corresponding to a category of "S_{M}", and inputs "S_{B}" to the binary classification model M11 corresponding to a category of "S_{B}".

An output result in a case where "S_{U}" is input to the binary classification model M11 may be referred to as "C_{U}", an output result in a case where "S_{M}" is input to the binary classification model M11 may be referred to as "C_{M}", and an output result in a case where "S_{B}" is input to the binary classification model M11 may be referred to as "C_{B}". The above-mentioned "C_{U}", "C_{M}", and "C_{B}" are indicated by the following Formula (1).
${C}_{U} , {C}_{M} , {C}_{B} ∈ \left\{0, 1\right\}$ (1)

The block BR1 includes a feature extracting model M12. Similar to the binary classification model M11, the feature extracting model M12 also differs for each slice. The feature extracting model M12 is a model that extracts a feature amount of point cloud data corresponding to each slice. The feature extracting model M12 may be a model based on PointNet. Any model may be employed for the feature extracting model M12 as long as it is capable of extracting a feature amount. The block BR1 includes the feature extracting models M12 whose number is corresponding to the division number of slices.

The information processing apparatus 10 inputs each slice to the feature extracting model M12 corresponding to a category of the corresponding slice so as to extract a feature amount. The information processing apparatus 10 inputs "S_{U}" to the feature extracting model M12 corresponding to a category of "S_{U}" so as to extract a feature amount of "S_{U}", inputs "S_{M}" to the feature extracting model M12 corresponding to a category of "S_{M}" so as to extract a feature amount of "S_{M}", and inputs "S_{B}" to the feature extracting model M12 corresponding to a category of "S_{B}" so as to extract a feature amount of "S_{B}".

Feature amounts extracted as described above are used in training the binary classification model M11. Specifically, by using the above-mentioned feature amounts, whether a label provided in a pseudo manner is right is determined so as to train the binary classification model M11. For example, the extracted feature amount of "S_{U}" is used in training the binary classification model M11 corresponding to a category of "S_{U}", the extracted feature amount of "S_{M}" is used in training the binary classification model M11 corresponding to a category of "S_{M}", and the extracted feature amount of "S_{B}" is used in training the binary classification model M11 corresponding to a category of "S_{B}".

In other words, the information processing apparatus 10 trains the binary classification model M11 corresponding to a category of "S_{U}" by using a feature amount of "S_{U}" having been extracted by using the corresponding feature extracting model M12, trains the binary classification model M11 corresponding to a category of "S_{M}" by using a feature amount of "S_{M}" having been extracted by using the corresponding feature extracting model M12, and trains the binary classification model M11 corresponding to a category of "S_{B}" by using a feature amount of "S_{B}" having been extracted by using the corresponding feature extracting model M12.

In this case, the information processing apparatus 10 trains the binary classification model M11 as well as the corresponding feature extracting model M12 by using a loss function. On the basis of a label provided in a pseudo manner by using the binary classification model M11 and a feature amount extracted by using the feature extracting model M12, the information processing apparatus 10 calculates a loss so as to repeatedly execute training on the binary classification model M11 as well as the corresponding feature extracting model M12 until the loss is reduced and, optimally, becomes minimum.

On the basis of a loss based on "C_{U}" and a feature amount of "S_{U}", the information processing apparatus 10 repeatedly trains the binary classification model M11 corresponding to an upper slice that is a category of "S_{U}". On the basis of a loss based on "C_{M}" and a feature amount of "S_{M}", the information processing apparatus 10 repeatedly trains the binary classification model M11 corresponding to a middle slice that is a category of "S_{M}". On the basis of a loss based on "C_{B}" and a feature amount of "S_{B}", the information processing apparatus 10 repeatedly trains the binary classification model M11 corresponding to a bottom slice that is a category of "S_{B}".

In this case, the information processing apparatus 10 may use a Fully Convolutional Network (namely, FCN network). By using a Fully Convolutional Network, the information processing apparatus 10 may train the binary classification model M11 corresponding to each category of a slice.

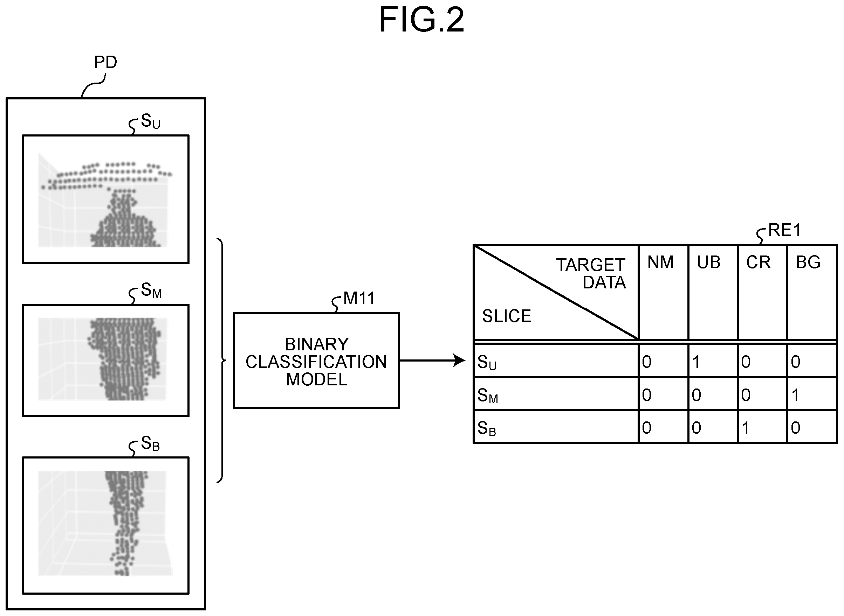

FIG. 2 is a diagram illustrating a challenge predictor module according to the first embodiment. Explanation similar to FIG. 1 is appropriately omitted. A prediction result RE1 is data indicating a provision result of a label of each slice in a case where target gait data (corresponding to target data) is provided. In a case where gait data (hereinafter, may be referred to as "NM data") of a normal human without an external attribute is provided, a numeric value of "0" is output from each slice. The NM data is the most basic data without an external attribute. In the NM data, there presents no external attribute, and thus a numeric value of "0" is output from all slices. Note that an output of a numeric value of "0" or "1" indicates presence/absence of a challenge (namely, external attribute) in a slice.

In FIG. 2, in a case where gait data (hereinafter, may be referred to as "UB data") of a human bringing an umbrella is provided, the umbrella corresponds to the upper part of gait data (because when the umbrella is held in an open state, the umbrella is located near a head portion of the walking person), a numeric value of "1" is output from an upper slice, and a numeric value of "0" is output from the middle slice and the bottom slice that are other than the upper slice.

Similarly, in a case where gait data (hereinafter, may be referred to as "CR data") of a human being carrying a briefcase, a briefcase corresponds to the bottom part of gait data (because briefcase is held in hand, briefcase is located near four-limb portion of walking person), a numeric value of "1" is output from the bottom slice, and a numeric value of "0" is output from the upper slice and the middle slice that are other than the bottom slice.

Similarly, in a case where gait data (hereinafter, may be referred to as "BG data") of a human being wearing a backpack, the backpack corresponds to the middle part of gait data (because in a case where the backpack is carried on his/her back, the backpack is located near torso portion of walking person), a numeric value of "1" is output from the middle slice, and a numeric value of "0" is output from the upper slice and the bottom slice that are other than the middle slice.

### <Probability Distribution Module>

The block BR2 in FIG. 1 indicates a probability distribution module. The probability distribution module is a module for obtaining a probability distribution in order to specify a point that is out of a distribution, which deviates from a distribution of a walking person that is a gait recognition target. The block BR2 includes a probability distribution model M21. The probability distribution model M21 is a model that outputs a probability distribution.

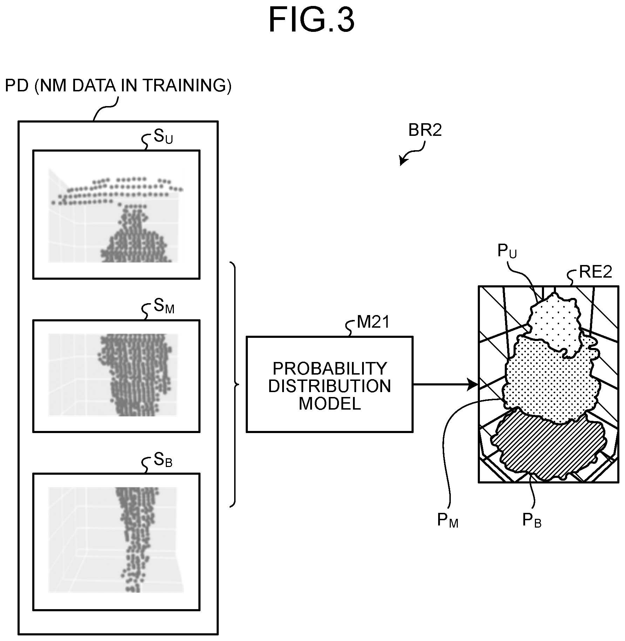

In the probability distribution module, the above-mentioned preprocessing (namely, mean centering, slice division, etc.) is similarly applied to input data. NM data is used as input data in training. NM data is used in training for comprehension (for modeling points of a human being) of a point distribution of a human being. In a case where training is executed by using NM data, it is possible to appropriately specify a point that is out of a distribution in application, which deviates from a distribution of NM data. FIG. 3 is a diagram illustrating a probability distribution module according to the first embodiment. Explanation similar to FIG. 1 and FIG. 2 are appropriately omitted.

The probability distribution model M21 also differs for each slice. In FIG. 1 and FIG. 3, the block BR2 includes the single probability distribution model M21, division is executed to obtain three slices of "S_{U}", "S_{M}", and "S_{B}", and thus the number of the probability distribution models M21 is also three. The block BR2 includes the probability distribution models M21 whose number corresponds to the division number of slices.

The information processing apparatus 10 inputs each slice to the probability distribution model M21 corresponding to a category of the corresponding slice. The information processing apparatus 10 inputs "S_{U}" to the probability distribution model M21 corresponding to a category of "S_{U}", inputs "S_{M}" to the probability distribution model M21 corresponding to a category of "S_{M}", and inputs "S_{B}" to the probability distribution model M21 corresponding to a category "S_{B}".

The information processing apparatus 10 inputs each slice to the probability distribution model M21 corresponding to a category of the corresponding slice so as to calculate a probability distribution. The information processing apparatus 10 inputs "S_{U}" to the probability distribution model M21 corresponding to a category of "S_{U}" so as to calculate a probability distribution of "S_{U}", inputs "S_{M}" to the probability distribution model M21 corresponding to a category of "S_{M}" so as to calculate a probability distribution of "S_{M}", and inputs "S_{B}" to the probability distribution model M21 corresponding to a category of "S_{B}" so as to calculate a probability distribution of "S_{B}".

An output result in a case where "S_{U}" is input to the probability distribution model M21 may be referred to as "P_{U}", an output result in a case where "S_{M}" is input to the probability distribution model M21 may be referred to as "P_{M}", and an output result in a case where "S_{B}" is input to the probability distribution model M21 may be referred to as "P_{B}". The "P_{U}", "P_{M}", and "P_{B}" respectively indicate probability distributions of specific slices. In FIG. 3, "P_{U}", "P_{M}", and "P_{B}" are comprehensively illustrated as an output result (corresponding to output result RE2).

The probability distribution model M21 may be a model based on a Gaussian Mixture Model (namely, GMM model), a Variational Autoencoder, a diffusion model, and the like. The probability distribution model M21 is trained on the basis of a distribution learning method. Any model may be employed for the probability distribution model M21 as long as it is capable of distribution learning.

In application, the processing of the probability distribution module and the processing of the challenge predictor module may be simultaneously executed, or may be separately executed. To the probability distribution models M21, all slices obtained by dividing point cloud data of a processing target may be input, or a slice alone may be input which is determined to include an external attribute in the binary classification model M11.

### <Disentanglement Data Generating Module>

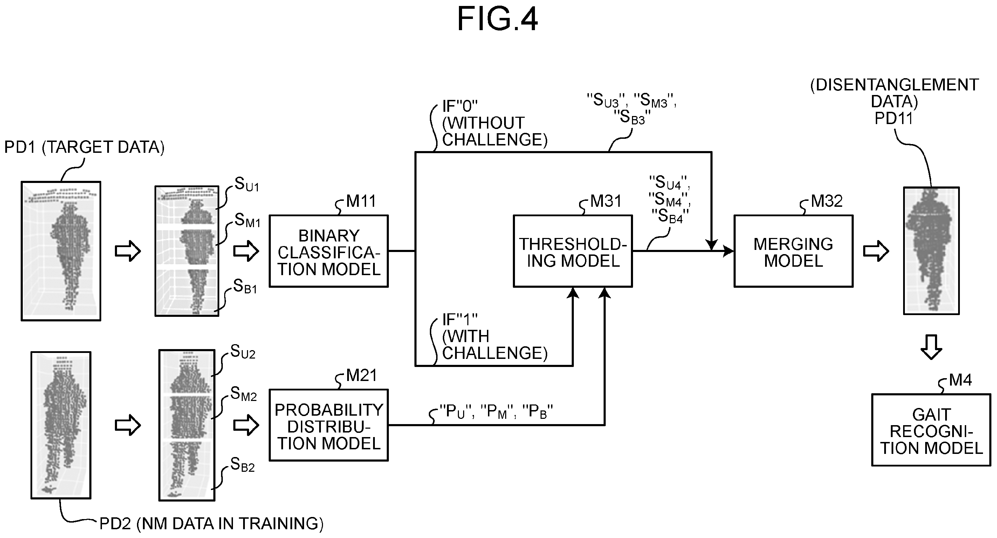

The information processing apparatus 10 in FIG. 1 generates disentangled point cloud data (hereinafter, may be referred to as "disentanglement data") by using the above-mentioned double modules. The disentanglement data is point cloud data obtained by removing a point of an external attribute from point cloud data of a processing target. In a case of point cloud data of a walking person bringing an umbrella, point cloud data is obtained by removing points of the umbrella from the point cloud data. FIG. 4 is a diagram illustrating a disentanglement data generating module according to the first embodiment. Explanations similar to FIGS. 1-3 are appropriately omitted.

Point cloud data PD1 is target data. The target data includes NM data, UB data, CR data BG data, and the like. Note that in a case where target data is NM data, the same data is generated as disentanglement data.

Point cloud data PD2 is NM data during training, and further is target data during application. In application, the point cloud data PD2 becomes the point cloud data PD1.

Each of point cloud data PD (PD1 and PD2) is divided into three slices. Hereinafter, three slices obtained by dividing the point cloud data PD1 may be referred to as "S_{U1}", "S_{M1}", and "S_{B1}"; and three slices obtained by dividing the point cloud data PD2 may be referred to as "S_{U2}", "S_{M2}", and "S_{B2}".

The "S_{U1}", "S_{M1}", and "S_{B1}" are input to the binary classification models M11 of a challenge predictor module, and the "S_{U2}", "S_{M2}", and "S_{B2}" are input to the probability distribution models M21 of a probability distribution module.

Labels of "Cᵤ", "C_{M}", and "C_{B}" are provided to "S_{U1}", "S_{M1}", and "S_{B1}" by the binary classification models M11 of a challenge predictor module. The labels of "Cᵤ", "C_{M}", and "C_{B}" are numeric values of "0" or "1", and a case where the numeric value is "1" indicates that there presents a challenge in a slice.

A threshold is applied (corresponding to thresholding model M31) only in a case where a challenge is determined to be present in a slice. A point (namely, point corresponding to an external attribute) out of a distribution is removed by using the above-mentioned threshold. Note that a slice is maintained, which is determined that a challenge is absent in the slice. Thus, it is possible to remove a point out of a distribution alone while maintaining a point within the distribution.

In a case where a slice is determined that a challenge is present therein, a threshold is applied to the slice so as to remove a point out of a distribution. A boundary is set by the above-mentioned threshold between a point out of a distribution and a point within the distribution, to be capable of removing the point out of the distribution. In a case where points of an umbrella and a walking person are included, a boundary indicating whether a point of the umbrella or a point of the walking person can be set, so that it is possible to remove points of the umbrella.

A threshold is applied to a slice alone, which is determined that a challenge is present therein. The above-mentioned threshold is experimentally derived. In a case where the threshold is applied to a likelihood of each point in a slice, the threshold is experimentally derived on the basis of the number of points that are erroneously classified as points out of a distribution. More specifically, in a case where the threshold is applied to a likelihood of each point, the number of points that are erroneously classified as points out of a distribution is obtained, and the threshold is derived on the basis of relationship between the threshold and the number of plotted points that are erroneously classified as described above.

A likelihood of each point is calculated by an output result of a probability distribution module. Specifically, a likelihood of each point is calculated by "P_{U}", "P_{M}", and "P_{B}" obtained by inputting "S_{U2}", "S_{M2}", and "S_{B2}" to the probability distribution models M21 of the probability distribution module. A likelihood of each point is indicated by the following Formula (2).
${L}_{i , a} = Likelihood \left\{{p}_{i}, {P}_{a}\right\} ∀ {p}_{i} ∈ {S}_{a} a ∈ \left\{U, M, B\right\}$ (2) (In Formula (2), pᵢ indicates an i-th point in a slice Sₐ, and L_{i,a} indicates a likelihood of the i-th point in the slice Sₐ.)

A calculated likelihood of each point is compared with a preliminarily decided threshold, a label of a numeric value of "1" is provided in a case where the likelihood is smaller than the threshold, and a label of a numeric value of "0" is provided in a case where the likelihood is equal to or more than the threshold.

A point provided with a label of a numeric value of "1", whose likelihood is determined to be smaller than a threshold, is maintained as a point within a distribution, and a point provided with a label of a numeric value of "0", whose likelihood is determined to be equal to or more than the threshold, is removed as a point out of the distribution. Thus, a point related to an external attribute is removed.

Finally, an already-filtered point is obtained on the basis of a likelihood and a threshold. The above-mentioned already-filtered point is indicated by the following Formula (3).
${S}_{i , a} = {w}_{i , a} \times {p}_{i} a ∈ \left\{U, M, B\right\}$ (3) (In Formula (3), w_{i,a} indicates a label of a numeric value of "0" or "1", which is provided to each point.)

As described above, a slice is maintained, to which a label of a numeric value of "0" is provided by the binary classification model M11 of a challenge predictor module; and a slice provided with a label of a numeric value of "1" is determined to include a challenge and further a threshold (namely, threshold experimentally derived based on likelihood that is calculated based on output result of probability distribution module) is applied thereto so as to be filtered.

The slices (namely, point slices: corresponding to "S_{U3}", "S_{M3}", and "S_{B3}") that are determined to be without a challenge and are maintained and the slices (namely, filtered slices: corresponding to "S_{U4}", "S_{M4}", and "S_{B4}") of already-filtered points are merged (corresponding to merging model M32) to reconstitute point cloud data of all gait data. Point cloud data (corresponding to point cloud data PD11) reconstituted as described above is disentanglement data. The above-mentioned disentanglement data is point cloud data reconstituted with respect to the point cloud data PD1 that is target data.

The disentanglement data is point cloud data (namely, point cloud data not including noise) obtained by removing points of an external attribute, and thus by using the above-mentioned disentanglement data, gait recognition having high accuracy can be realized.

### <Usage of Disentanglement Data>

The information processing apparatus 10 in FIG. 1 executes gait recognition by using the generated disentanglement data. The information processing apparatus 10 inputs the generated disentanglement data to a conventional gait recognition model M4 such as LidarGait so as to execute gait recognition (for example, execute analysis and/or identification of an individual). Any model may be employed for the gait recognition model M4 as long as it is capable of executing gait recognition.

The information processing apparatus 10 trains the gait recognition model M4 by using a loss function. The information processing apparatus 10 calculates a loss on the basis of a gait recognition result using the gait recognition model M4 so as to repeatedly train the gait recognition model M4 until the loss is reduced and, optimally, becomes minimum.

So far, the challenge predictor module, the probability distribution module, the disentanglement data generating module, and usage of the disentanglement data have been explained. The above-mentioned is the outline of the information processing apparatus 10 according to the first embodiment.

### <3. Configuration of Information Processing Apparatus>

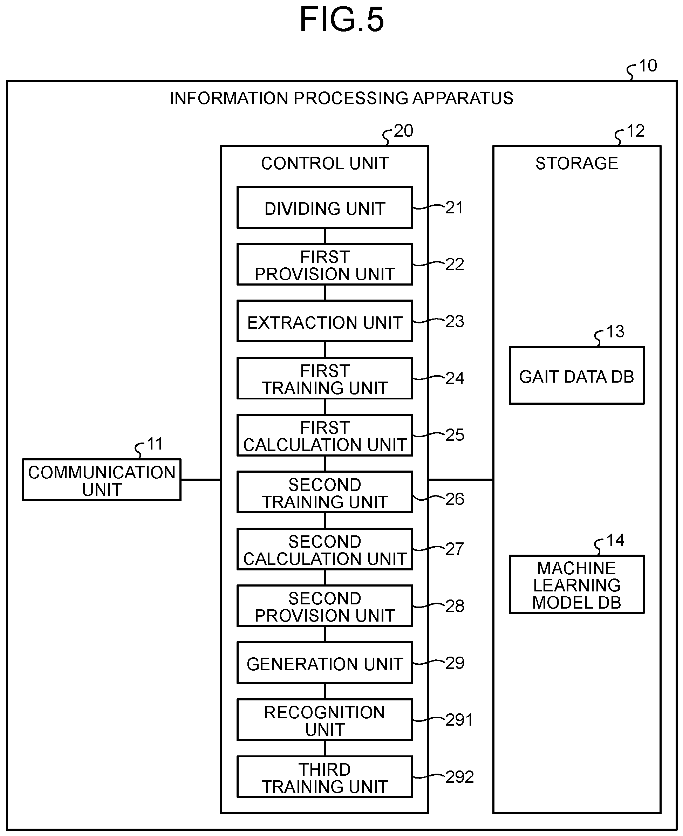

A configuration of the information processing apparatus 10 according to the first embodiment will be explained. FIG. 5 is a functional block diagram illustrating a functional configuration of the information processing apparatus 10 according to the first embodiment. As illustrated in FIG. 5, the information processing apparatus 10 includes a communication unit 11, a storage 12, and a control unit 20. Note that the information processing apparatus 10 is not limited to the illustrated one, and may include a display and the like.

The communication unit 11 executes communication with another device. For example, the communication unit 11 receives input data. The communication unit 11 receives various kinds of instructions and data and the like from an administrator terminal that is used by an administrator.

The storage 12 stores therein various kinds of data, a program to be executed by the control unit 20, and the like. For example, the storage 12 stores therein a gait data DB 13, a machine learning model DB 14, and the like.

The gait data DB 13 is a database that stores therein gait data of various real situations. For example, the gait data DB 13 stores therein training data to be used in training the binary classification model M11 and the probability distribution model M21. The data stored in the gait data DB 13 may be training data for supervised training or training data for unsupervised training, and may be arbitrarily selected depending on a machine learning method of a machine learning model.

The machine learning model DB 14 is a database that stores therein a model that is generated by machine learning. For example, the machine learning model DB 14 stores therein a model using a Deep Neural Network (DNN). For example, the machine learning model DB 14 stores therein a model using a neural network and another machine learning algorithm. Note that a model stored in the machine learning model DB 14 may be generated by another device.

Models stored in the machine learning model DB 14 are various models according to the first embodiment. For example, models stored in the machine learning model DB 14 are the preprocessing model M1, the binary classification model M11, the feature extracting model M12, the probability distribution model M21, the thresholding model M31, the merging model M32, each of which is illustrated in FIG. 1, and the gait recognition model M4.

The preprocessing model M1 is a model that is used before the challenge predictor module BR1 and the probability distribution module BR2. The preprocessing model M1 is a model whose input is point cloud data so as to output point cloud data divided into the predetermined number of slices.

The binary classification model M11 and the feature extracting model M12 are models to be used in the challenge predictor module BR1. The binary classification model M11 is a model whose input is point cloud data so as to output whether a challenge is present in the slice Sₐ by using a numeric value of "0" or "1". The feature extracting model M12 is a model whose input is point cloud data so as to output a feature amount.

The probability distribution model M21 is a model to be used in the probability distribution module BR2. The probability distribution model M21 is a model whose input is point cloud data so as to output a probability distribution.

The thresholding model M31 and the merging model M32 are models to be used in a disentanglement data generating module BR3. The thresholding model M31 is a model whose input is point cloud data so as to output whether an i-th point of the slice Sₐ is out of a distribution or within the distribution by using a numeric value of "0" or "1". The merging model M32 is a model whose input is point cloud data of a plurality of slices so as to output disentanglement data.

The gait recognition model M4 is a model to be used after the disentanglement data generating module BR3. The gait recognition model M4 is a model whose input is disentanglement data so as to output a gait recognition result (identification information of individual and the like).

The control unit 20 is a processing unit that manages all of the information processing apparatus 10. For example, the control unit 20 includes a dividing unit 21, a first provision unit 22, an extraction unit 23, a first training unit 24, a first calculation unit 25, a second training unit 26, a second calculation unit 27, a second provision unit 28, a generation unit 29, a recognition unit 291, and a third training unit 292.

The dividing unit 21 divides point cloud data into slices by using the preprocessing model M1 according to the first embodiment. For example, the dividing unit 21 divides point cloud data into the preliminarily decided predetermined number of slices.

The dividing unit 21 may divide point cloud data on which preprocessing such as mean centering has been executed. The dividing unit 21 may execute preprocessing such as mean centering.

The dividing unit 21 divides point cloud data including a gait recognition target into the predetermined number of slices.

The first provision unit 22 determines whether a challenge is present in a slice (slice obtained by division by dividing unit 21) by using the binary classification model M11 according to the first embodiment, so as to provide a label. For example, the first provision unit 22 provides a label of a numeric value of "0" or "1" to each slice. The first provision unit 22 provides a label in a pseudo manner in training the binary classification model M11.

A label of a numeric value of "0" by the first provision unit 22 indicates that a challenge is absent so as to maintain (alternatively retain or hold) a slice, and a label of a numeric value of "1" indicates that a challenge is present so as to execute filtering on a slice.

The first provision unit 22 determines whether a challenge is present in a slice for each of the slices obtained by dividing point cloud data including a gait recognition target into the predetermined number of slices.

The first provision unit 22 is a machine learning model (machine learning model trained by first training unit 24 to be mentioned later) that provides, in a case where a slice is input thereto, a label indicating whether a challenge is present in the slice, so as to determine whether a challenge is present in a slice to be processed by using a machine learning model that is trained until a loss becomes is reduced and, optimally, minimum on the basis of a feature amount of the slice.

The first provision unit 22 inputs a slice to be processed of a corresponding category to a machine learning model that is trained for each category (upper slice, middle slice, bottom slice, and the like) of a slice, so as to determine whether a challenge is present in the slice to be processed.

The extraction unit 23 extracts a feature amount of a slice by using the feature extracting model M12 according to the first embodiment. For example, the extraction unit 23 extracts a feature amount of each of the slices obtained by division by the dividing unit 21.

The first training unit 24 trains a challenge predictor module. The first training unit 24 calculates a loss for each slice on the basis of a label provided by the first provision unit 22 and a feature amount extracted by the extraction unit 23, so as to train the binary classification model M11 for each slice. For example, the first training unit 24 repeatedly trains the binary classification model M11 until a loss optimally becomes minimum.

The first calculation unit 25 calculates a probability distribution of a slice by using the probability distribution model M21 according to the first embodiment. For example, the first calculation unit 25 calculates a probability distribution of each of the slices obtained by division by the dividing unit 21.

The second training unit 26 trains a probability distribution module. The second training unit 26 trains the probability distribution model M21 so as to calculate, in a case where a slice is input thereto, a probability distribution of the slice on the basis of a predetermined distribution training method.

The second training unit 26 specifies NM data, and further trains the probability distribution model M21 by using the NM data. The second training unit 26 determines whether data is NM data, and further trains the probability distribution model M21 by using data that is determined to be NM data.

The second calculation unit 27 calculates a likelihood of an i-th point of the slice Sₐ by using the calculation Formula (2) according to the first embodiment.

The second calculation unit 27 calculates a likelihood of each point in a slice (in slice determined that challenge is present therein by first provision unit 22) determined that a challenge is present therein.

The second calculation unit 27 calculates a likelihood of each point in a slice by using an output result obtained by inputting a slice determined that a challenge is present therein, to a machine learning model (namely, machine learning model trained by second training unit 26) that has been trained so as to calculate a probability distribution of the slice in a case where the slice is input thereto.

The second calculation unit 27 calculates a likelihood of each point in a slice by using an output result obtained by inputting a slice determined that a challenge is present therein, to a machine learning model (namely, machine learning model trained by second training unit 26) that has been trained by using point cloud data including a gait recognition target alone.

By using the thresholding model M31 according to the first embodiment, the second provision unit 28 determines whether an i-th point of the slice Sₐ is out of a distribution or within the distribution (namely, whether being point out of distribution of gait recognition target included in point cloud data divided by dividing unit 21), so as to provide a label. For example, the second provision unit 28 provides a label of a numeric value of "0" or "1" to an i-th point of the slice Sₐ.

A label of a numeric value of "0" by the second provision unit 28 indicates that a point is determined to be out of a distribution and is to be removed, and a label of a numeric value of "1" indicates that a point is within the distribution and is to be maintained.

The second provision unit 28 determines whether each point is a point out of a distribution on the basis of a likelihood (namely, likelihood calculated by second calculation unit 27) thereof.

The second provision unit 28 determines whether each point is a point out of a distribution on the basis of a likelihood thereof and a threshold that is experimentally preliminarily derived.

The second provision unit 28 determines whether each point is a point out of a distribution on the basis of a threshold that is derived on the basis of relationship between the number of points having been erroneously classified when a predetermined threshold is applied thereto and the threshold. Note that the removal of the point that has been determined to be a point out of a distribution may be executed by the second provision unit 28, or may be executed by the generation unit 29 to be mentioned later.

The generation unit 29 generates disentanglement data by using the merging model M32 according to the first embodiment. For example, the generation unit 29 merges a slice determined to be without a challenge by the first provision unit 22 and an already-filtered slice obtained by removing a point out of a distribution by the second provision unit 28, so as to generate disentanglement data.

As described above, points determined to be out of a distribution are excepted from a slice determined that a challenge is present therein, so as to finally generate point cloud data without an external attribute. By the above-mentioned series of processes, point cloud data (in FIG. 4, corresponding to PD11) without an external attribute is generated from point cloud data (in FIG. 4, corresponding to PD1) with the external attribute. The above-mentioned finally generated point cloud data without an external attribute is disentanglement data.

The generation unit 29 maintains a slice determined that a challenge is absent therein, and further executes filtering on a slice determined that a challenge is present therein so as to remove a point out of a distribution of a gait recognition target (namely, gait recognition target included in point cloud data obtained by division by dividing unit 21), so as to reconstitute the point cloud data to generate disentanglement data.

The generation unit 29 merges a slice determined that a challenge is absent therein, and a filtered slice obtained by removing a point out of a distribution of a gait recognition target by execution of filtering on a slice determined that a challenge is present therein, so as to generate disentanglement data.

The generation unit 29 maintains a point determined not to be a point out of a distribution, and further removes a point determined to be a point out of the distribution, so as to execute filtering on a slice determined that a challenge is present therein.

The recognition unit 291 executes gait recognition by using the gait recognition model M4 (namely, machine learning model trained by third training unit 292) according to the first embodiment. For example, the recognition unit 291 inputs disentanglement data generated by the generation unit 29 to the gait recognition model M4, so as to execute gait recognition.

The recognition unit 291 inputs disentanglement data to a machine learning model trained so as to identify, in a case where point cloud data is input, a gait recognition target (namely, gait recognition target included in point cloud data divided by dividing unit 21), so as to execute gait recognition.

The recognition unit 291 inputs disentanglement data to a machine learning model that is trained until a loss is reduced and, optimally, becomes minimum on the basis of a gait recognition result using predetermined point cloud data, so as to execute gait recognition.

The third training unit 292 calculates a loss on the basis of a gait recognition result using the gait recognition model M4 so as to train the gait recognition model M4. For example, the third training unit 292 repeatedly trains the gait recognition model M4 until a loss becomes minimum.

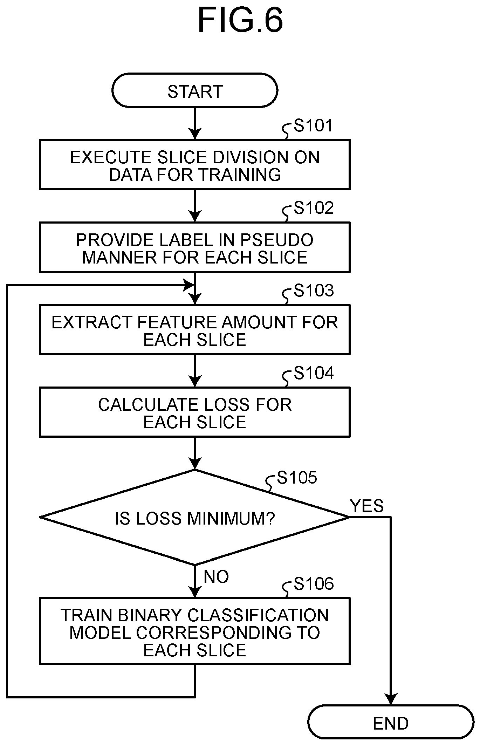

FIG. 6 is a flowchart illustrating a flow of a training process of the challenge predictor module BR1 illustrated in Fig. 1 according to the first embodiment. As illustrated in FIG. 6, with reference to FIG. 5, in a case where acquiring point cloud data for training, the dividing unit 21 executes thereon slice division to obtain the preliminarily decided predetermined number of slices (Step S101). The first provision unit 22 provides in a pseudo manner a label indicating whether a challenge is present for each slice (Step S102). The extraction unit 23 extracts a feature amount for each slice (Step S103).

The first training unit 24 calculates a loss for each slice on the basis of a label that is provided for the corresponding slice and a feature amount that is extracted for the corresponding slice (Step S104).

The first training unit 24 determines whether a loss calculated for each slice is minimum (Step S105). In a case where the determining determines that a loss is not minimum (Step S105: No), the first training unit 24 trains the binary classification model M11 corresponding to each slice (Step S106), and returns the processing to Step S103 so as to execute the processing again. In a case where the determining determines that a loss is minimum (Step S105: Yes), the first training unit 24 ends the information processing.

Namely, in a case where a loss calculated for a predetermined slice is not minimum, the first training unit 24 trains the binary classification model M11 corresponding to the predetermined slice, and in a case where a loss is minimum, the first training unit 24 ends information processing with respect to training of the binary classification model M11 corresponding to the predetermined slice.

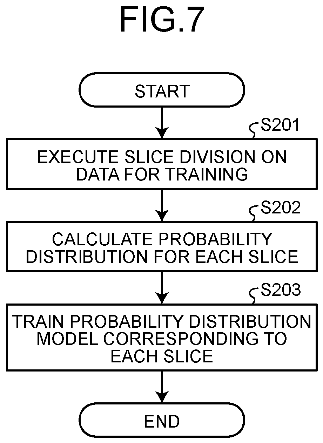

FIG. 7 is a flowchart illustrating a flow of a training process of the probability distribution module BR2 illustrated in FIG. 1 according to the first embodiment. As illustrated in FIG. 7 and with reference to FIG. 5, in a case where acquiring point cloud data for training, the dividing unit 21 executes slice division into the preliminarily decided predetermined number of slices (Step S201). The first calculation unit 25 calculates a probability distribution for each slice (Step S202).

The second training unit 26 trains the probability distribution model M21 corresponding to each slice on the basis of the predetermined distribution learning method (Step S203). The information processing is then ended.

Namely, in a case where training the probability distribution model M21 corresponding to a predetermined slice, the second training unit 26 ends the information processing with respect to training of the probability distribution model M21 corresponding to the predetermined slice.

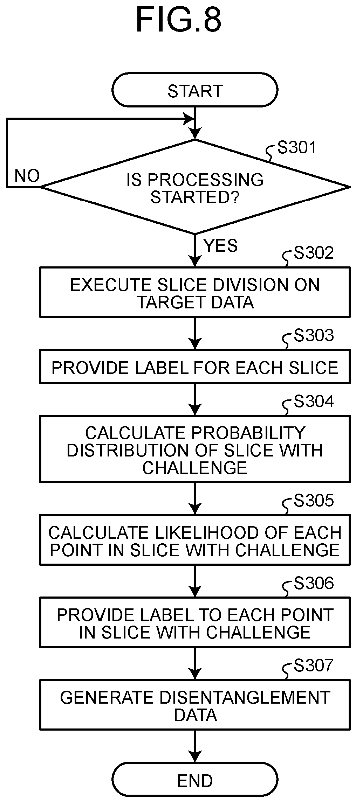

FIG. 8 is a flowchart illustrating a flow of an application process according to the first embodiment. As illustrated in FIG. 8 and with reference to FIG. 5, in a case where a start of the processing is ordered (Step S301: Yes), the dividing unit 21 acquires target data, and further execute slice division thereon into the preliminarily decided predetermined number of slices (Step S302).

The first provision unit 22 provides a label indicating whether a challenge is present for each slice (Step S303).

The first calculation unit 25 maintains a slice without a challenge, and further calculates a probability distribution of a slice with a challenge (Step S304).

The second calculation unit 27 calculates a likelihood of each point in the slice with the challenge (Step S305).

The second provision unit 28 provides a label to each point in the slice including the challenge, the label indicating whether each point is out-of-distribution or in-distribution (Step S306). The generation unit 29 removes a point out of a distribution so as to execute filtering, and further generates disentanglement data (Step S307). The information processing is then ended.

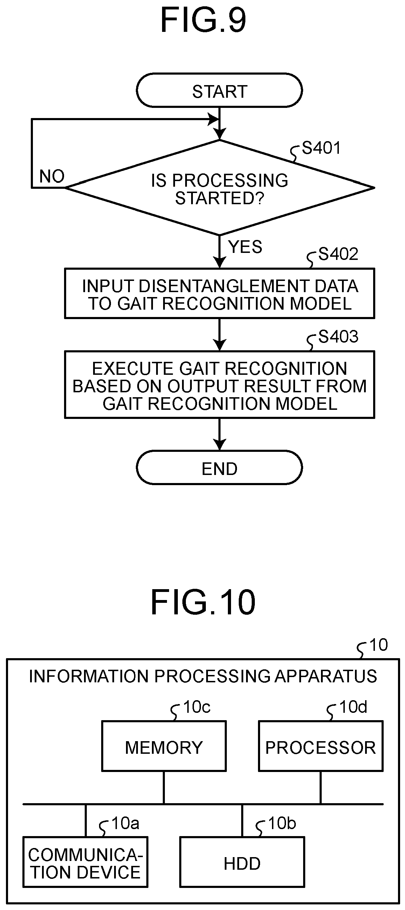

FIG. 9 is a flowchart illustrating a flow of a process for using disentanglement data according to the first embodiment. As illustrated in FIG. 9 and with reference to FIG. 5, in a case where a start of the processing is ordered (Step S401: Yes), the recognition unit 291 acquires disentanglement data, and further input it to the gait recognition model M4 (Step S402).

The recognition unit 291 executes gait recognition on the basis of an output result from the gait recognition model M4 (Step S403). The information processing is then ended.

Data examples, numeric value examples, model examples, the data number, the slice number, the model number, specific examples, and the like disclosed in the above-mentioned embodiment are merely examples, and may be arbitrarily changed.

Processing procedures, controlling procedures, specific names, and information including various data and parameters disclosed in the above-mentioned description and the above-mentioned drawings may be arbitrarily changed unless otherwise noted.

The illustrated components of the devices are functionally conceptual, and thus they are not to be physically configured as illustrated in the drawings. Specific forms of distribution and integration of the configuration elements of the illustrated devices are not limited to those illustrated in the drawings, and all or some of the devices can be configured by separating or integrating the apparatus functionally or physically in any unit, according to various types of loads, the status of use, etc.

Moreover, all or an arbitrary part of processing functions executed in devices may be realized by a CPU and a program that is analyzed and executed by the CPU, or may be realized as hardware by wired logic.

FIG. 10 is a diagram illustrating a hardware configuration example. As illustrated in FIG. 10, the information processing apparatus 10 includes a communication device 10a, a Hard Disk Drive (HDD) 10b, a memory 10c, and a processor 10d. The units illustrated in FIG. 10 are connected to each other by a bus or the like.

The communication device 10a is a network interface card or the like so as to execute communication with another device. The HDD 10b stores therein a program and a DB that cause functions illustrated in FIG. 5 to operate.

The processor 10d reads a program for executing processes similar to processing units illustrated in FIG. 5 from the HDD 10b and the like, and further expands the program into the memory 10c so as to cause a process for executing functions illustrated in FIG. 5 and the like to operate. For example, the above-mentioned process executes functions similar to processing units included in the information processing apparatus 10. Specifically, the processor 10d reads, from the HDD 10b and the like, a program including functions similar to the dividing unit 21, the first provision unit 22, the extraction unit 23, the first training unit 24, the first calculation unit 25, the second training unit 26, the second calculation unit 27, the second provision unit 28, the generation unit 29, the recognition unit 291, the third training unit 292, and the like. The processor 10d executes a process for executing the processing similar to the dividing unit 21, the first provision unit 22, the extraction unit 23, the first training unit 24, the first calculation unit 25, the second training unit 26, the second calculation unit 27, the second provision unit 28, the generation unit 29, the recognition unit 291, the third training unit 292, and the like.

As described above, the information processing apparatus 10 reads a program and then executes the program so as to operate as an information processing apparatus that executes a machine learning method. The information processing apparatus 10 may read the above-mentioned program from a recording medium by using a medium reader, and further may execute the read program so as to realize functions similar to those according to the above-mentioned embodiment. Note that a program according to another embodiment is not limited to execution by the information processing apparatus 10. In a case where another computer or another server executes a program, and the other computer and the other server cooperate with each other so as to execute the program, the present disclosure may be similarly applied thereto.

The above-mentioned program may be distributed via a network such as the Internet. The above-mentioned program is recorded in a computer-readable recording medium such as a hard disk, a flexible disk (FD), a Compact Disc Read only memory (CD-ROM), a Magneto-Optical disk (MO), and a Digital Versatile Disc (DVD); and further is read out by a computer from the recording medium so as to be executed.

## Claims

1. A machine learning method carried out by a computer, comprising:
for each of a predetermined number of slices divided from point cloud data including a target of gait recognition, determining (S302-S303) whether a corresponding slice includes a point out of a distribution that deviates from the distribution of the target;
maintaining (S304-S306) a point slice determined not to include the point out of the distribution;
obtaining (S304-S306) a filtered slice by filtering the corresponding slice determined to include the point out of the distribution to remove the point out of the distribution; and
merging (S307) the point slice determined not to include the point out of the distribution and the filtered slice with each other to reconstitute the point cloud data and generate disentanglement data.

2. The machine learning method according to claim 1, further including:
calculating (S305) a corresponding likelihood of each of points in the corresponding slice determined to include the point out of the distribution; and
determining (S306) whether each of the points is the point out of the distribution based on the corresponding likelihood.

3. The machine learning method according to claim 2, wherein the determining (S306) includes determining whether each of the points is the point out of the distribution based on the corresponding likelihood and a threshold that is experimentally preliminarily derived.

4. The machine learning method according to claim 3, wherein the determining (S306) includes determining whether each of the points is the point out of the distribution based on a threshold that is derived based on the predetermined threshold and a relationship between a number of points that are erroneously classified when a predetermined threshold is applied.

5. The machine learning method according to claim 1, wherein the determining (S306) includes determining whether a slice to be processed includes the point out of the distribution by using a machine learning model on which training is executed until a loss is minimized based on a feature amount of a slice, the machine learning model providing, in a case where a slice is input, a label that indicates whether the input slice includes the point out of the distribution.

6. The machine learning method according to claim 5, wherein the determining (S306) includes:
inputting a category slice to be processed of a category to a machine learning model on which training is executed for each category of the category slice; and
determining whether the category slice to be processed includes the point out of the distribution.

7. The machine learning method according to claim 2, wherein the calculating (S305) includes calculating a likelihood of each of the points in the corresponding slice by using an output result obtained by inputting the corresponding slice determined to include the point out of the distribution to a machine learning model on which training is executed to calculate, in a case where a slice is input, a probability distribution of the input slice.

8. The machine learning method according to claim 7, wherein the calculating (S305) includes calculating the likelihood of each of the points in the corresponding slice by using an output result obtained by inputting the corresponding slice determined to include the point out of the distribution to the machine learning model on which training is executed by using point cloud data that includes a target of gait recognition alone.

9. The machine learning method according to claim 1, further including:
in a case where point cloud data is input, inputting (S402) the disentanglement data to a machine learning model on which training is executed to identify a target of gait recognition; and
executing (S403) the gait recognition.

10. The machine learning method according to claim 9, wherein the executing (S403) the gait recognition includes:
inputting the disentanglement data to the machine learning model on which training is executed until a loss is minimized based on a gait recognition result using predetermined point cloud data; and
executing the gait recognition.

11. A machine learning program that causes a computer to execute a process comprising:
for each of a predetermined number of slices divided from point cloud data including a target of gait recognition, determining (S302-S303) whether a corresponding slice includes a point out of a distribution that deviates from the distribution of the target;
maintaining (S304-S306) a point slice determined not to include the point out of the distribution;
obtaining (S304-S306) a filtered slice by filtering the corresponding slice determined to include the point out of the distribution to remove the point out of the distribution; and
merging (S307) the point slice determined not to include the point out of the distribution and the filtered slice with each other to reconstitute the point cloud data and generate disentanglement data.

12. An information processing apparatus (10) comprising a control unit (20) configured to execute a process including:
for each of a predetermined number of slices divided from point cloud data including a target of gait recognition, determining (S302-S303) whether a corresponding slice includes a point out of a distribution that deviates from the distribution of the target;
maintaining (S304-S306) a point slice determined not to include the point out of the distribution;
obtaining (S304-S306) a filtered slice by filtering the corresponding slice determined to include the point out of the distribution to remove the point out of the distribution; and
merging (S307) the point slice determined not to include the point out of the distribution and the filtered slice with each other to reconstitute the point cloud data and generate disentanglement data.
